(19) Europäisches Patentamt
European Patent Office
Office européen des brevets

(11) **EP 4 239 514 A1**

(12) **EUROPEAN PATENT APPLICATION**
published in accordance with Art. 153(4) EPC

(43) Date of publication:
**06.09.2023 Bulletin 2023/36**

(51) International Patent Classification (IPC):
**G06F 30/20** (2020.01)   **H01Q 1/36** (2006.01)

(21) Application number: **22865879.5**

(22) Date of filing: **19.10.2022**

(86) International application number:
**PCT/CN2022/126192**

(87) International publication number:
**WO 2023/138127 (27.07.2023 Gazette 2023/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.01.2022 CN 202210053123**

(71) Applicant: **Changzhou Xingyu Automotive Lighting Systems Co., Ltd.**
**Xinbei District**
**Changzhou**
**Jiangsu 213022 (CN)**

(72) Inventor: **XU, Jian**
**Changzhou**
**Jiangsu 213022 (CN)**

(74) Representative: **von Tietzen und Hennig, Nikolaus**
**Lorenz Seidler Gossel**
**Rechtsanwälte Patentanwälte**
**Partnerschaft mbB**
**Widenmayerstraße 23**
**80538 München (DE)**

(54) **METHOD FOR DESIGNING SUBSTRATE INTEGRATED WAVEGUIDE ANTENNA**

(57)   The present disclosure provides a method of designing a substrate integrated waveguide antenna. The substrate integrated waveguide antenna includes a waveguide assembly and dielectric substrates, where the waveguide assembly includes a plurality of cylindrical conductors arranged in an array, the dielectric substrates are connected to two axial ends of the waveguide assembly, and one of the dielectric substrates is connected to a coaxial cable. The method includes the following steps: S1: calculating a fundamental solution of a scattered wave; S2: further transforming the fundamental solution of the scattered wave in the S1 by using a plurality of boundary conditions; and S3: turning calculations about an electromagnetic field into calculations about cylindrical coordinates in a plane by using a method of moments based on an entire-domain basis function. According to the present disclosure, the method of moments based on the entire-domain basis function is adopted in the analysis of electromagnetic radiation to turn the main issues of antenna design into calculations about the cylindrical coordinates, which greatly reduces the amount of data in simulation calculations.

FIG. 1

EP 4 239 514 A1

**Description**

**TECHNICAL FIELD**

The present disclosure relates to the technical field of antennas, and in particular, to a method of designing a substrate integrated waveguide antenna.

**BACKGROUND**

In recent years, wireless communication technologies have been developed rapidly and widely used. In a communication system, due to nonlinear characteristics of active devices, a large number of noise signals are generated outside the operating bands, which deteriorates the system performance and causes interference to other systems. Therefore, high requirements are raised on frequency selectivity of the antenna and the filter to suppress the out-of-band noises and interference.

The substrate integrated waveguide is one of the most studied and applied waveguide structures in recent years. It not only retains the characteristics of conventional metal waveguides such as low radiation loss, low insertion loss, and large power capacity, but also has the advantages of low cost, small size, light weight, and easy integration, so it has high engineering application value.

Common antennas have poor frequency selectivity and the suppression on the system out-of-band noises and interference is not obvious. Therefore, an antenna of good frequency selectivity is needed to suppress the out-of-band noises and interference, so as to reduce the requirements on other device design indexes in the system and reduce the implementation cost of the system. Besides, due to the large amount of data in waveguide simulation calculations for an antenna, it is difficult to calculate reasonable antenna parameter values to achieve optimal strength of a scattered wave of the antenna.

**SUMMARY**

The present disclosure provides a method of designing a substrate integrated waveguide antenna to solve the technical problem that it is difficult to calculate reasonable antenna parameter values due to the large amount of data in waveguide simulation calculations for an antenna.

A substrate integrated waveguide antenna includes a waveguide assembly and dielectric substrates, where the waveguide assembly includes a plurality of cylindrical conductors arranged in an array, the dielectric substrates are connected to two axial ends of the waveguide assembly, and the dielectric substrates are connected to a coaxial cable.

A method of designing a substrate integrated waveguide antenna is provided, where the substrate integrated waveguide antenna described above is used. The method includes the following steps:

S1: calculating a fundamental solution of a scattered wave;
S2: further transforming the fundamental solution of the scattered wave in the S1 by using a plurality of boundary conditions; and
S3: turning calculations in horizontal and vertical directions of an electromagnetic field into calculations about cylindrical coordinates in the horizontal direction by using a method of moments based on an entire-domain basis function.

Further, the fundamental solution of the scattered wave in the step S1 is calculated as follows:

S11: expressing electric field strength of an incident wave by a formula: $E_z^{\mathrm{inc}}(\vec{\rho}) = E_0 \mathrm{e}^{-jk_0\rho\cos(\varphi-\varphi_0)}$ , where $k_0 = \omega\sqrt{\varepsilon_0\mu_0}$, $\mathrm{e}^{-jk_0\rho\cos(\varphi-\varphi_0)}$ is a time factor, $\varphi_0$ is an angle of incidence, $k_0$ is a propagation constant, $\mu_0$ is magnetic permeability in vacuum, $\varepsilon_0$ is a dielectric constant in vacuum, $\rho$ represents cylindrical coordinates of any point on the cylindrical conductor, and $E_0$ is the electric field strength of the incident wave;

S12: the scattered wave generated by an electromagnetically induced current on the cylindrical conductor satisfying a Helmholtz wave equation as follows: $\nabla^2 E_z^S(\vec{\rho}) + k_0^2 E^S(\vec{\rho}) = j\omega\mu_0 J_z(\vec{\rho}) = jk_0\varsigma_0 J_z(\vec{\rho})$ , where $\eta = \sqrt{\dfrac{\mu_0}{\varepsilon_0}}$ , is propagation admittance, $J_z(\vec{\rho})$ is the electromagnetically induced current on the cylindrical conductor, and $\varsigma_0$ is conductivity of a medium;

S13: transforming the equation in the S12 into a differential equation: $\nabla^2 g(\vec{\rho};\vec{\rho}') + k_0^2 g(\vec{\rho};\vec{\rho}') = -\sigma(\vec{\rho}-\vec{\rho}')$ and obtaining a fundamental solution to the equation: $g(\vec{\rho};\vec{\rho}') = \frac{1}{j*4} H_0^{(2)} k_0 |\vec{\rho}-\vec{\rho}'|$ ; and

S14: substituting parameters in the S12 into the fundamental solution in the S13 to obtain a fundamental solution of the scattered wave: $E_z^S(\vec{\rho}) = -j\omega\mu_0 \int_C g(\vec{\rho};\vec{\rho}') J_z(\vec{\rho}') d\rho' = -\frac{K_0\eta}{A} \int_C H_0^{(2)}(k_0|\vec{\rho}-\vec{\rho}'|) J_z(\vec{\rho}') d\rho$ , where C=C$_1$+C$_2$+...+C$_N$.

Further, the step S2 includes:

S21: obtaining an equation $E_z^{inc} + E^S = 0$ when a sum of the electric field strength on the cylindrical conductor is 0; and substituting the equation into the fundamental solution in the S14 to obtain a first transformation of the fundamental solution:

$$E_z^{inc}(\vec{\rho}) = -jk_0\varsigma_0 \int_C g(\vec{\rho};\vec{\rho}') J_z(\vec{\rho}') d\rho' = \frac{k_0\eta}{4} \int_C H_0^{(2)}(k_0|\vec{\rho}-\vec{\rho}'|) J_z(\vec{\rho}') d\rho'$$

, where

$$J_z(\vec{\rho}') = \sum_{n=-N_v}^{N_v} X_n^v e^{-jn\varphi}$$

;

S22: representing points on a surface of the cylindrical conductor by polar coordinates to obtain coordinate functions of any point on the cylindrical conductor: $x = a_v \cos(\varphi) + x_v$, $y = a_v \sin(\varphi) + y_v$ ($-\pi < \varphi < \pi$); substituting the coordinate functions into the first transformation of the fundamental solution in the step S21 to obtain a second transformation of the fundamental solution:

$$E_z^{inc}(\vec{\rho}) = \frac{k_0\eta}{4} \int_C H_0^{(2)}(k_0|\vec{\rho}-\vec{\rho}'|) \sum_{n=-N_v}^{N_v} X_n^v e^{-jn\varphi'} a_v d\varphi'$$

; and

S23: integrating the second transformation of the fundamental solution in the step S22 to obtain a third transformation of the fundamental solution:

$$\int_{-\pi}^{\pi} E_z^{inc}(\vec{\rho}) e^{jm\varphi} a_u d\varphi = \frac{k_0\eta}{4} \sum_{r=1}^{V} \sum_{n=-N_v}^{N_v} X_n^r \int_{-\pi}^{\pi} \int_{-\pi}^{\pi} H_0^{(2)}(k_0|\vec{\rho}-\vec{\rho}'|) e^{jm\varphi} e^{-jn\varphi'} a_u d\varphi a_v d\varphi'$$

, where $a_v$ represents a radius of the v$^{th}$ cylindrical conductor and $a_u$ represents a radius of the u$^{th}$ cylindrical conductor.

Further, the step S3 includes:

S31: turning the third transformation of the fundamental solution in the step S23 into simultaneous linear equations:

$$\begin{bmatrix} A_{11} & A_{12} & \cdots & A_{1N} \\ A_{21} & A_{22} & & A_{2N} \\ \vdots & \vdots & \ddots & \vdots \\ A_{N1} & A_{N2} & \cdots & A_{NN} \end{bmatrix} \begin{bmatrix} X_1 \\ X_2 \\ \vdots \\ X_N \end{bmatrix} = \begin{bmatrix} B_1 \\ B_2 \\ \vdots \\ B_N \end{bmatrix}$$

, where A represents inductance of the cylindrical conductor, $A_{ii}$ represents self-inductance of the i$^{th}$ cylindrical conductor, and $A_{ij}$ represents mutual inductance of the i$^{th}$ cylindrical conductor on the j$^{th}$ cylindrical conductor; $X_i$ represents strength of the scattered wave generated by the i$^{th}$ cylindrical conductor; and $B_i$ represents current distribution on the i$^{th}$ cylindrical conductor; and

S32: symmetrizing a coefficient determinant and obtaining by matrix transformation a formula for the strength of the scattered wave:

$$E_Z^S(\vec{\rho}) = -\frac{k_0\eta}{4} \sum_{v=1}^{N} \sum_{n=-N_v}^{N_v} X_n^v I_n^v$$

, where

$$I_n^v = a_v \int_0^{2\pi} H_0^{(2)}(k_0|\vec{\rho}-\vec{\rho}'|) e^{-jn\varphi'} d\varphi' = 2\pi a_v J_n(k_0 a_v) H_n^{(2)}(k_0|\vec{\rho}-\vec{\rho}_v|) e^{-jn\varphi_v}$$

,

and

$$H_n^{(2)}(k_0|\vec{\rho}-\vec{\rho}_v|) = \sqrt{\frac{2}{\pi k_0|\vec{\rho}-\vec{\rho}_v|}} e^{-j\frac{k_0|\vec{\rho}-\vec{\rho}_v|-(2v+1)\pi}{4}}$$

.

Further, assuming that a diameter of the cylindrical conductor is D and a center-to-center distance between two adjacent cylindrical conductors in a direction parallel to a waveguide channel is P, D/P=0.5.

Preferably, the cylindrical conductors are metal tubes.

Further, the coaxial cable is arranged on a center line of the waveguide assembly.

Further, assuming that a wavelength of an incident electromagnetic wave is $\lambda$ and a center-to-center distance between two adjacent cylindrical conductors in a direction perpendicular to the waveguide channel is $D_1$, $D_1=0.9\lambda$.

Further, a relationship between a distance $D_2$ from the coaxial cable to a closed end of the dielectric substrate and the wavelength $\lambda$ of the incident electromagnetic wave satisfies $D_2=0.25\lambda$.

Further, a relationship between a length $D_3$ of the waveguide channel of the waveguide assembly and the wavelength $\lambda$ of the incident electromagnetic wave satisfies $D_3=2.4\lambda$.

The present disclosure has the following beneficial effects.

(1) According to the method of designing the substrate integrated waveguide antenna of the present disclosure, the method of moments based on the entire-domain basis function is adopted in the analysis of electromagnetic radiation to turn the main issues of antenna design into calculations about the cylindrical coordinates, which greatly reduces the amount of data in simulation calculations.

(2) According to the method of designing the substrate integrated waveguide antenna of the present disclosure, a reasonable ratio of the diameter D of the cylindrical conductor to the center-to-center distance P of the adjacent cylindrical conductors in the direction of the waveguide channel is set to avoid wave leakage of a simplified antenna structure and achieve the optimal cost performance in design.

## BRIEF DESCRIPTION OF THE DRAWINGS

The present disclosure is further described below with reference to the accompanying drawings and embodiments.

FIG. 1 is a schematic diagram of a specific embodiment of a substrate integrated waveguide antenna according to the present disclosure.

FIG. 2 is an electric field distribution diagram of the specific embodiment of the substrate integrated waveguide antenna in FIG. 1.

FIG. 3 is a schematic diagram showing electric field and magnetic field directions when a uniform plane wave is perpendicularly incident on an interface of two different media.

In the figures: 1. cylindrical conductor, 2. dielectric substrate, 3. coaxial cable, 4. waveguide channel.

## DETAILED DESCRIPTION OF THE EMBODIMENTS

Embodiments of the present disclosure are described in detail below and are exemplified in the accompanying drawings, where the same or similar reference signs indicate the same or similar elements or elements with the same or similar functions. The embodiments described below with reference to the accompanying drawings are exemplary and are intended to explain the present disclosure, instead of limiting the present disclosure.

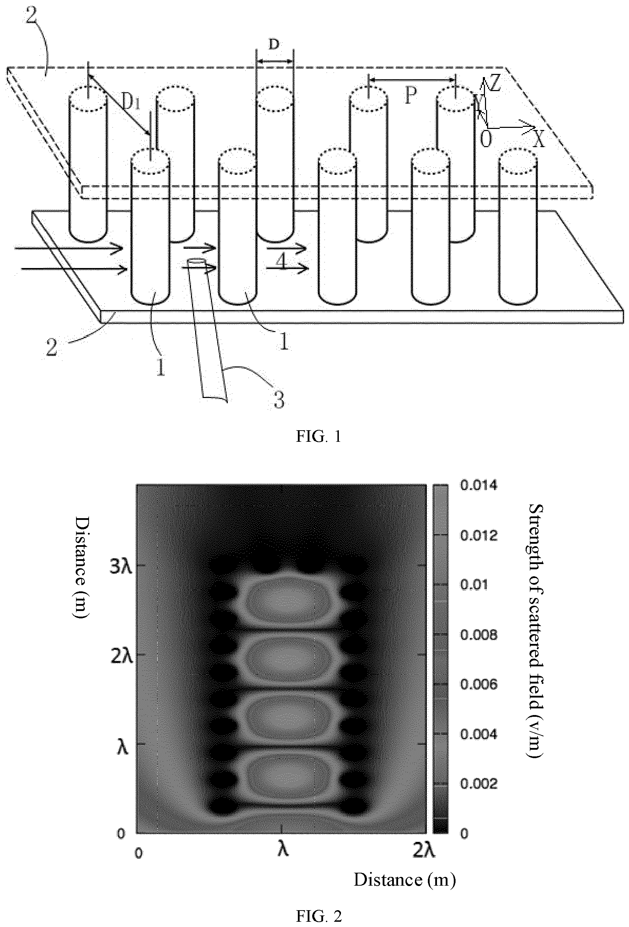

As shown in FIG. 1, a substrate integrated waveguide antenna includes a waveguide assembly and dielectric substrates 2, where the waveguide assembly includes a plurality of cylindrical conductors 1 arranged in an array and the dielectric substrates 2 are connected to two axial ends of the waveguide assembly. The waveguide assembly is usually arranged in a rectangular shape, a waveguide channel 4 is formed between the two adjacent rows of cylindrical conductors 1, the waveguide channel 4 extends along the length direction of the waveguide assembly, and the length F of the waveguide channel 4 is the length of the waveguide assembly. The two dielectric substrates 2 are connected to each of the cylindrical conductors 1, and the dielectric substrates 2 are connected to a coaxial cable 3.

It is assumed in the present disclosure that, the axial direction of the cylindrical conductor 1 is the Z-axis direction, and in a plane parallel to the central axis of the cylindrical conductor 1, the direction parallel to the waveguide channel 4 is the X-axis direction and the direction perpendicular to the waveguide channel 4 is the Y-axis direction.

In this embodiment, the cylindrical conductors 1 are metal tubes and are arranged in two rows with five cylindrical conductors 1 in each row, the two rows of the cylindrical conductors 1 define two side walls of the waveguide assembly, and the waveguide channel 4 is formed between the two side walls. The dielectric substrates 2 are fabricated by using a single-layer printed circuit board (PCB) process to reduce costs and facilitate mass production. The coaxial cable 3 generally includes an inner conductor, an insulator, and an outer conductor that are coaxial and are sequentially sleeved on each other from inside to outside. The inner conductor of the coaxial cable 3 is inserted into the dielectric substrate 2 and the outer conductor of the coaxial cable 3 is connected to the surface of the dielectric substrate 2. The coaxial cable 3 is preferably arranged on the center line of the waveguide assembly.

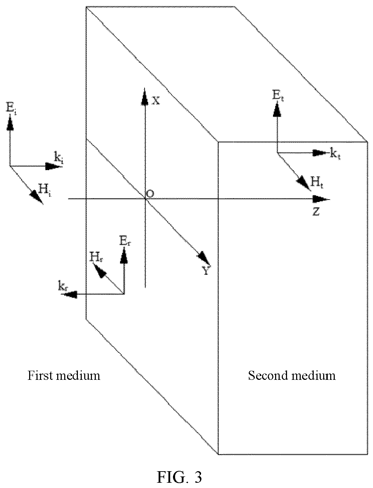

FIG. 3 is a schematic diagram showing electric field and magnetic field directions when a uniform plane wave is perpendicularly incident on the interface of two different media (a first medium and a second medium), where $E_i$, $E_t$, $E_r$ are electric field directions of an incident wave, a transmitted wave, and a reflected wave, respectively; $H_i$ is a magnetic field direction of the incident wave, $k_i$ is a propagation constant of the medium in the incident direction, $H_t$ is a magnetic field direction of the transmitted wave, $k_t$ is a propagation constant of the medium in the transmission direction, $H_r$ is a magnetic field direction of the reflected wave, and $k_r$ is a propagation constant of the medium in the reflection direction.

In the present disclosure, the first medium is air and the second medium is the cylindrical conductor 1. When an observation point $\vec{\rho}$ moves along the cylindrical surface of the cylindrical conductor 1, the sum of the electric field strength on the cylindrical conductor 1 is 0. Since the incident wave is perpendicularly incident on the cylindrical conductor 1 (the incident direction of the incident wave is parallel to the Z-axis direction according to the definitions of the directions in the present disclosure), only a magnetic field in the horizontal direction and an electric field in the vertical direction of the cylindrical conductor 1 are generated (that is, the direction of the magnetic field is parallel to the XOY plane and the direction of the electric field is parallel to the Z-axis direction), and the electric field is uniformly distributed on the surface of the cylindrical conductor 1, so that in the simulation analysis, only the electric field distribution on the section of the cylindrical conductor 1 (that is, the electric field distribution in the XOY plane) needs to be considered. Therefore, the present disclosure provides a method of designing a substrate integrated waveguide antenna, which adopts a method of moments based on an entire-domain basis function in the analysis of electromagnetic radiation to turn the calculations about the electromagnetic field from the conventional calculations about the three coordinate axes into the calculations about the cylindrical coordinates in the plane, thereby greatly reducing the amount of data in the simulation calculations.

The method includes the following steps.

S1: A fundamental solution of a scattered wave is calculated.

S2: The fundamental solution of the scattered wave in the S1 is further transformed by using a plurality of boundary conditions.

S3: Calculations in horizontal and vertical directions of an electromagnetic field are turned into calculations about cylindrical coordinates in the horizontal direction by using the method of moments based on the entire-domain basis function, where the horizontal direction refers to a horizontal plane and the vertical direction refers to a direction perpendicular to the horizontal plane.

Most electromagnetic field issues are based on the initial formula $L(h)=g$, where L is a linear operator, g is a known function, and h is an unknown function. Since it is difficult to directly find a rigorous solution to this formula, the method of moments is used to obtain a numerical solution according to the linear characteristics of the linear operator L. The specific method is as follows:

Firstly, the unknown function h is expanded into N basis functions as follows $h_n: \quad h = \sum_{n=1}^{N} a_n h_n$ , where $a_n$ is an unknown coefficient.

Then, the function about h is substituted into the initial formula and the linear operator L is linearly transformed to obtain the formula $\sum_{n=1}^{N} a_n L(h_n) = g$ .

Finally, N weight functions $W_m$ are defined and the formula after linear transformation is integrated to obtain the equation $\sum_{n=1}^{N} a_n \langle W_m, L(h_n) \rangle = \langle W_m, g \rangle$ . This equation can also be expressed by the determinant $[l_{mn}][a_n]=[g_m]$, where

m=1, 2, 3, ..., N, $[l_{mn}] = \begin{bmatrix} \langle W_1, Lh_1 \rangle & \langle W_1, Lh_2 \rangle & \cdots \\ \langle W_2, Lh_1 \rangle & \langle W_2, Lh_2 \rangle & \cdots \\ \cdots & \cdots & \cdots \end{bmatrix}$ , $[a_n] = \begin{bmatrix} a_1 \\ a_2 \\ \vdots \end{bmatrix}$ , and

$$[g_m] = \begin{bmatrix} \langle W_1, g \rangle \\ W_2, g \\ \vdots \end{bmatrix}.$$

$h = \sum_{n=1}^{N} a_n h_n$ is substituted into the above determinant to obtain $[\tilde{h}] = [h_1 \quad h_2 \quad h_3 \quad \cdots]$ , and the unknown function h can be expressed by the formula $h = [\tilde{h}][a_n] = [\tilde{h}][l_{mn}][g_m]$ .

The above deduction steps are applied to the electromagnetic field analysis of the substrate integrated waveguide antenna in the present disclosure, and the specific calculation process is described below.

The fundamental solution of the scattered wave in the step S1 is calculated as follows:

S11: If the time factor is $e^{-j\omega t}$ (t is time, $\omega=2\pi f$, $\omega$ is oscillation angular frequency, and f is frequency) and the electromagnetic field component of the substrate integrated waveguide antenna is a time-harmonic field, that is, it changes with time, the electric field strength for the propagation of the incident wave in the Z-axis direction is expressed by the formula: $E_z^{inc}(\vec{\rho}) = E_0 e^{-jk_0\rho\cos(\varphi-\varphi_0)}$, where $k_0 = \omega\sqrt{\varepsilon_0\mu_0}$, $e^{-jk_0\rho\cos(\varphi-\varphi_0)}$ is the time factor, $\varphi_0$ is the angle of incidence, $k_0$ is the propagation constant, $\mu_0$ is the magnetic permeability in vacuum, $\varepsilon_0$ is the dielectric constant in vacuum, $\rho$ represents cylindrical coordinates of any point on the cylindrical conductor 1, and $E_0$ is the electric field strength of the incident wave.

S12: The scattered wave generated by the electromagnetically induced current on the cylindrical conductor 1 satisfies a Helmholtz wave equation as follows: $\nabla^2 E_z^S(\vec{\rho}) + k_0^2 E^S(\vec{\rho}) = j\omega\mu_0 J_z(\vec{\rho}) = jk_0\varsigma_0 J_z(\vec{\rho})$, where $\eta = \sqrt{\dfrac{\mu_0}{\varepsilon_0}}$, $\eta$ is propagation admittance, $J_z(\vec{\rho})$ is the electromagnetically induced current on the cylindrical conductor 1, and $\varsigma_0$ is the conductivity of the medium.

S13: The equation in the S12 is transformed into a differential equation: $\nabla^2 g(\vec{\rho};\vec{\rho}') + k_0^2 g(\vec{\rho};\vec{\rho}') = -\sigma(\vec{\rho}-\vec{\rho}')$ and a fundamental solution to the equation is obtained:

$$g(\vec{\rho};\vec{\rho}') = \frac{1}{j*4} H_0^{(2)} k_0 |\vec{\rho}-\vec{\rho}'|.$$

S14: The parameters in the S12 are substituted into the fundamental solution in the S13 to obtain a fundamental solution of the scattered wave: $E_z^S(\vec{\rho}) = -j\omega\mu_0 \int_C g(\vec{\rho};\vec{\rho}') J_z(\vec{\rho}') d\rho' = -\dfrac{k_0\eta}{4}\int_C H_0^{(2)}\left(k_0|\vec{\rho}-\vec{\rho}'|\right) J_z(\vec{\rho}') d\rho'$, where $C = C_{1+}C_{2+}...+C_N$.

The fundamental solution is transformed by using a plurality of boundary conditions. The specific steps are as follows:

S21: When the observation point $\vec{\rho}$ moves on the cylindrical conductor 1, the sum of the electric field strength on the cylindrical conductor 1 is 0, that is, $E_z^{inc} + E^s = 0$; this equation is substituted into the fundamental solution in the S14 to obtain a first transformation of the fundamental solution: $E_z^{inc}(\vec{\rho}) = -jk_0\varsigma_0 \int_C g(\vec{\rho};\vec{\rho}') J_z(\vec{\rho}') d\rho' = \dfrac{k_0\eta}{4}\int_C H_0^{(2)}\left(k_0|\vec{\rho}-\vec{\rho}'|\right) J_z(\vec{\rho}') d\rho'$, where $J_z(\vec{\rho}')$ is the current distribution on the vth cylindrical conductor 1.

Besides, since the current is in circular distribution along the cylindrical surface of the cylindrical conductor 1, that is, the current distribution is a function of the period $2\pi$, the current distribution on the vth cylindrical conductor 1 can be expressed by the formula $J_z(\vec{\rho}') = \sum_{n=-N_v}^{N_v} X_n^v e^{-jn\varphi'}$.

S22: Since the section of the cylindrical conductor 1 is circular, if the points on the surface of the cylindrical conductor 1 are represented by polar coordinates through coordinate system transformation, the coordinate functions of any point on the cylindrical conductor 1 are obtained as follows: $x = a_v\cos(\varphi) + x_v$, $y = a_v\sin(\varphi) + y_v$ ($-\pi < \varphi < \pi$); the coordinate functions are substituted into the first transformation of the fundamental solution in the step S21 to obtain

$$E_Z^{inc}(\vec{\rho}) = \frac{k_0\eta}{4} \int_C H_0^{(2)}\left(k_0\left|\vec{\rho} - \vec{\rho}'\right|\right) \sum_{n=-N_v}^{N_v} X_n^v e^{-jn\varphi'} a_v d\varphi'$$

a second transformation of the fundamental solution:

S23: The left and right sides of the second transformation of the fundamental solution in the step S22 are multiplied by $e^{j\omega\varphi}$ and are integrated along $C_u$, that is, integrated with respect to $\varphi$ over $-\pi$ to $\pi$ to obtain a third transformation of the fundamental solution: $\int_{-\pi}^{\pi} E_Z^{inc}(\vec{\rho}) e^{jm\varphi} a_u d\varphi = \frac{k_0\eta}{4} \sum_{v=1}^{N} \sum_{n=-N_v}^{N_v} X_n^v \int_{-\pi}^{\pi} \int_{-\pi}^{\pi} H_0^{(2)}\left(k_0\left|\vec{\rho} - \vec{\rho}'\right|\right) e^{jm\varphi} e^{-jn\varphi'} a_u d\varphi a_v d\varphi'$ , where $a_v$ represents the radius of the $v^{th}$ cylindrical conductor 1 and $a_u$ represents the radius of the $u^{th}$ cylindrical conductor 1.

To calculate the unknown coefficient $X_n^v$, the addition theorem is used to rewrite the left and right sides of the above formula. Firstly, the left side is rewritten into a vector determinant: $b_m^u = a_u \int_{-\pi}^{\pi} E_Z^{inc}(\vec{\rho}) e^{j\omega\varphi} d\varphi$ , where

$$\vec{\rho} \in C_u: \quad \vec{\rho} = \vec{\rho}_u + a_u\left(\hat{x}\cos\varphi + \hat{y}\sin\varphi\right)$$ . Therefore,

$$b_m^u = a_u E_0 e^{-j\vec{k}\vec{\rho}_u} \int_0^{2\pi} e^{j[m\varphi - k_0 a_u \cos(\varphi - \varphi_0)]} d\varphi = (-j)^m 2\pi a_u E_0 J_m\left(k_0 a_u\right) e^{j[m\varphi_0 - k_0 a_u \cos(\varphi_u - \varphi_0)]}$$ . Then, the right side of the formula is rewritten, the summation formula about $X_n^v$ is put aside, and the remaining part is written into a coefficient determinant $a_{mn}^{uv}$ :

$$a_{mn}^{uv} = \frac{k_0\eta}{4} a_u a_v \sum_{v=1}^{N} \sum_{n=-N_v}^{N_v} \int_C H_0^{(2)}\left(k_0\left|\vec{\rho} - \vec{\rho}'\right|\right) e^{jm\varphi} e^{-jn\varphi'} d\varphi d\varphi'$$

$$= \frac{\pi^2\eta}{k_0} k_0 a_u k_0 a_v J_m\left(k_0 a_u\right) J_n\left(k_0 a_v\right) H_{n-m}^{(2)}\left(k_0\left|\vec{\rho} - \vec{\rho}'\right|\right) e^{-j(n-m)\alpha}$$ .

S31: The coefficient determinant $a_{mn}^{uv}$ and the vector determinant $b_m^u$ are rearranged into simultaneous linear

equations: $\begin{bmatrix} A_{11} & A_{12} & \cdots & A_{1N} \\ A_{21} & A_{22} & & A_{2N} \\ \vdots & \vdots & \ddots & \vdots \\ A_{N1} & A_{N2} & \cdots & A_{NN} \end{bmatrix} \begin{bmatrix} X_1 \\ X_2 \\ \vdots \\ X_N \end{bmatrix} = \begin{bmatrix} B_1 \\ B_2 \\ \vdots \\ B_N \end{bmatrix}$ , where A represents the inductance of the cylindrical conductor 1, $A_{ii}$ represents the self-inductance of the $i^{th}$ cylindrical conductor 1, and $A_{ij}$ represents the mutual inductance of the $i^{th}$ cylindrical conductor 1 on the $j^{th}$ cylindrical conductor 1, for example, An represents the self-inductance of the first cylindrical conductor 1, $A_{12}$ represents the mutual inductance of the first cylindrical conductor 1 on the second cylindrical conductor 1, and so on; $X_i$ represents strength of the scattered wave generated by the $i^{th}$ cylindrical conductor 1, for example, $X_1$ represents strength of the scattered wave generated by the first cylindrical conductor 1, and so on; $B_i$ represents the current distribution on the $i^{th}$ cylindrical conductor 1, for example, $B_1$ represents the current distribution on the first cylindrical conductor 1, and so on.

S32: The entire-domain basis function method is applied on the weight function to symmetrize the coefficient determinant, so that the diagonal determinant $a_{mn}^{uv}$ can be expressed by

$$a_{mn}^{uv} = \frac{\pi^2\eta}{k_0} k_0 a_u k_0 a_v J_m\left(k_0 a_u\right) J_n\left(k_0 a_v\right) H_{n-m}^{(2)}\left(k_0\left|\vec{\rho} - \vec{\rho}'\right|\right) e^{-j(n-m)\alpha}$$ and the determinant $B_u$ can be expressed by

$$b_m^u = (-j)^m 2\pi a_u E_0 J_m\left(k_0 a_u\right) e^{j[m\varphi_0 - k_0 a_u \cos(\varphi_u - \varphi_0)]}$$ .

The following formula for the strength of the scattered wave is obtained by matrix transformation:

$$E_Z^S(\vec{\rho}) = -\frac{k_0\eta}{4}\sum_{v=1}^{N}\sum_{n=-N_v}^{N_v}X_n^v I_n^v$$

, where

$$I_n^v = a_v\int_0^{2\pi}H_0^{(2)}\left(k_0\left|\vec{\rho}-\vec{\rho}'\right|\right)e^{-jn\varphi'}d\varphi' = 2\pi a_v J_n(k_0 a_v)H_n^{(2)}\left(k_0\left|\vec{\rho}-\vec{\rho}_v\right|\right)e^{-jn\varphi_v} \qquad H_n^{(2)}\left(k_0\left|\vec{\rho}-\vec{\rho}_v\right|\right)=\sqrt{\frac{2}{\pi k_0\left|\vec{\rho}-\vec{\rho}_v\right|}}e^{-j\frac{k_0\left|\vec{\rho}-\vec{\rho}_v\right|-(2v+1)\pi}{4}}$$

.

It can be seen from the above formula that the main issues of antenna design are eventually turned into calculations about the vector $\vec{\rho}$-$\vec{\rho}_v$, that is, about the diameter of the cylindrical conductor 1 in the waveguide assembly and the interval between the adjacent cylindrical conductors 1.

The following table shows the initial relevant parameter values of the electromagnetic field in the embodiment of the substrate integrated waveguide antenna:

| wavelength | $\lambda$ |
|---|---|
| angle of incidence | $\varphi_0$ |
| dielectric constant in vacuum | $\varepsilon_0 = 0.8854 \times 10^{-12}[F/m]$ |
| magnetic permeability in vacuum | $\mu_0 = 4\pi \times 10^{-12}[H/m]$ |
| propagation constant | $k_0 = \dfrac{2\pi}{\lambda}$ |
| propagation admittance | $\eta = \sqrt{\dfrac{\mu_0}{\varepsilon_0}}$ |

In this embodiment, calculations and numerical simulation indicate that a better gathering effect of the electromagnetic wave is achieved and no leakage of the electromagnetic wave is caused under the following conditions: Assuming that the diameter of the cylindrical conductor 1 is D and the center-to-center distance between two adjacent cylindrical conductors 1 in the direction parallel to the waveguide channel 4 is P, D/P=0.5. Assuming that the wavelength of the incident electromagnetic wave is $\lambda$ and the center-to-center distance between two adjacent cylindrical conductors 1 in the direction perpendicular to the waveguide channel 4 is $D_1$, $D_1=0.9\lambda$.

Preferably, the distance from the coaxial cable 3 to the closed end of the dielectric substrate 2 is $D_2$, and $D_2=0.25\lambda$.

Further, the length of the waveguide channel 4 of the waveguide assembly is $D_3$, and $D_3=2.4\lambda$.

FIG. 2 is a diagram showing electric field distribution of the structure of the substrate integrated waveguide antenna described in this embodiment (the transverse axis indicates the distance in the width direction of the waveguide channel 4 and the longitudinal axis on the left indicates the distance in the length direction of the waveguide channel). The highlighted area in FIG. 2 is the waveguide channel 4 and the cylindrical conductors 1 are on the left and right sides of the waveguide channel 4. It can be seen from FIG. 2 that the electromagnetic field is within the waveguide channel 4 and does not leak through the adjacent cylindrical conductors 1, thereby achieving efficient propagation of the electromagnetic wave.

The substrate integrated waveguide antenna of the present disclosure has a simple structure, and a reasonable ratio of the diameter D of the cylindrical conductor 1 to the center-to-center distance P of the adjacent cylindrical conductors 1 in the direction of the waveguide channel 4 is set to avoid wave leakage of the antenna structure and achieve the optimal cost performance ratio in design.

The parameters are listed below:

L: linear operator;
g: known function;
h: unknown function;
$a_n$: unknown coefficient;
$h_n$: basis function of the unknown function h;
$W_m$: weight function;
t: time;
$\omega$: oscillation angular frequency;
f: frequency;

$\varphi_0$: angle of incidence;

$k_0$: propagation constant;

$\mu_0$: magnetic permeability in vacuum;

$\varepsilon_0$: dielectric constant in vacuum;

$\lambda$: wavelength of the incident electromagnetic wave;

$\rho'$: vector from the origin of cylindrical coordinates to any point on the circumference of the cylindrical conductor 1;

$\rho_v$: vector from the origin of cylindrical coordinates to the center point of the $v^{th}$ cylindrical conductor;

$E_0$: electric field strength of the incident wave;

$E_z^{inc}(\vec{\rho})$ : electric field strength of the incident wave at any point $\vec{\rho}$ in the Z-axis direction;

$\eta$: propagation admittance;

$J_z(\vec{\rho})$: induced current by the electric field at any point $\vec{\rho}$ in the Z-axis direction;

$J_z(\vec{\rho}')$: induced current by the electric field at the position p' on the circumferential surface of the $v^{th}$ cylindrical conductor 1 in the Z-axis direction;

$X_n^v$ : determinant to be solved of the $n^{th}$ grid division point on the $v^{th}$ cylindrical conductor 1;

$\varsigma^0$ : conductivity of the medium;

$E_z^s(\vec{\rho})$ : scattered electric field strength at any point $\vec{\rho}$ in the Z-axis direction;

$E^s(\vec{\rho})$: electric field strength of the scattered wave at the point $\rho$;

$J_m(k_0 a_u)$: induced current in the $m^{th}$ grid area;

$a_v$: the radius of the $v^{th}$ cylindrical conductor 1;

$a_u$: the radius of the $u^{th}$ cylindrical conductor 1;

$a_{mn}^{uv}$ : coefficient determinant;

$b_m^u$ : vector determinant;

A: inductance of the cylindrical conductor 1, An: self-inductance of the first cylindrical conductor 1, and $A_{12}$: mutual inductance of the first cylindrical conductor 1 to the second cylindrical conductor 1;

$X_1$: strength of the scattered wave generated by the first cylindrical conductor 1;

$B_1$: current distribution on the first cylindrical conductor 1;

$D_1$: the center-to-center distance between two adjacent cylindrical conductors 1 in the direction perpendicular to the waveguide channel 4;

D: the diameter of the cylindrical conductor 1;

P: the center-to-center distance between two adjacent cylindrical conductors 1 in the direction parallel to the waveguide channel 4;

$D_2$: the distance from the coaxial cable 3 to the closed end of the dielectric substrate 2;

$D_3$: the length of the waveguide channel 4.

In this specification, the schematic statements of the above terms do not necessarily mean the same embodiments. Moreover, the illustrated specific features, structures, materials, or characteristics can be properly combined in any one or more embodiments.

Enlightened by the preferred embodiments of the present disclosure and based on the above description, persons involved in the art can make various changes and modifications without departing from the scope of the technical idea of the present disclosure. The technical scope of the present disclosure is not limited to the content of the specification, and shall be determined according to the appended claims.

## Claims

1. A method of designing a substrate integrated waveguide antenna, **characterized in that**, the substrate integrated waveguide antenna comprises a waveguide assembly and dielectric substrates (2), wherein the waveguide assembly comprises a plurality of cylindrical conductors (1) arranged in an array, the dielectric substrates (2) are connected to two axial ends of the waveguide assembly, and the dielectric substrates (2) are connected to a coaxial cable (3); the method comprises the following steps:

S1: calculating a fundamental solution of a scattered wave;

S2: further transforming the fundamental solution of the scattered wave in the S1 by using a plurality of boundary conditions; and

S3: turning calculations in horizontal and vertical directions of an electromagnetic field into calculations about cylindrical coordinates in the horizontal direction by using a method of moments based on an entire-domain basis function.

2. The method of designing the substrate integrated waveguide antenna according to claim 1, **characterized in that**, the fundamental solution of the scattered wave in the step S1 is calculated as follows:

S11: expressing electric field strength of an incident wave by a formula: $E_z^{\mathrm{inc}}(\vec{\rho}) = E_0 e^{-jk_0\rho\cos(\varphi-\varphi_0)}$

, wherein $k_0 = \omega\sqrt{\varepsilon_0\mu_0}$, $e^{-jk_0\rho\cos(\varphi-\varphi_0)}$ is a time factor, $\varphi_0$ is an angle of incidence, $k_0$ is a propagation constant, $\mu_0$ is magnetic permeability in vacuum, $\varepsilon_0$ is a dielectric constant in vacuum, $\rho$ represents cylindrical coordinates of any point on the cylindrical conductor (1), and $E_0$ is the electric field strength of the incident wave;

S12: the scattered wave generated by an electromagnetically induced current on the cylindrical conductor (1) satisfying a Helmholtz wave equation as follows: $\nabla^2 E_z^S(\vec{\rho}) + k_0^2 E^S(\vec{\rho}) = j\omega\mu_0 J_z(\vec{\rho}) = jk_0\varsigma_0 J_z(\vec{\rho})$ wherein

$\eta = \sqrt{\dfrac{\mu_0}{\varepsilon_0}}$, $\eta$ is propagation admittance, $J_z(\overline{\rho})$ is the electromagnetically induced current on the cylindrical conductor (1), and $\varsigma^0$ is conductivity of a medium;

S13: transforming the equation in the S12 into a differential equation: $\nabla^2 g(\vec{\rho};\vec{\rho}') + k_0^2 g(\vec{\rho};\vec{\rho}') = -\sigma(\vec{\rho}-\vec{\rho}')$, and obtaining a fundamental solution to the equation: $g(\vec{\rho};\vec{\rho}') = \dfrac{1}{j*4} H_0^{(2)} k_0 |\vec{\rho}-\vec{\rho}'|$; and

S14: substituting parameters in the S12 into the fundamental solution in the S13 to obtain a fundamental solution of the scattered wave: $E_z^S(\vec{\rho}) = -j\omega\mu_0 \int_C g(\vec{\rho};\vec{\rho}') J_z(\vec{\rho}') d\rho' = -\dfrac{k_0\eta}{4} \int_C H_0^{(2)}(k_0|\vec{\rho}-\vec{\rho}'|) J_z(\vec{\rho}') d\rho'$, wherein $C = C_1 + C_2 + ... + C_N$.

3. The method of designing the substrate integrated waveguide antenna according to claim 2, **characterized in that**, the step S2 comprises:

S21: obtaining an equation $E_z^{\mathrm{inc}} + E^S = 0$ when a sum of the electric field strength on the cylindrical conductor (1) is 0; and substituting the equation into the fundamental solution in the S14 to obtain a first transformation of the fundamental solution: $E_z^{inc}(\vec{\rho}) = -jk_0\varsigma_0 \int_C g(\vec{\rho};\vec{\rho}') J_z(\vec{\rho}') d\rho' = \dfrac{k_0\eta}{4} \int_C H_0^{(2)}(k_0|\vec{\rho}-\vec{\rho}'|) J_z(\vec{\rho}') d\rho'$, wherein $J_z(\vec{\rho}') = \sum_{n=-N_v}^{N_v} X_n^v e^{-jn\varphi'}$;

S22: representing points on a surface of the cylindrical conductor (1) by polar coordinates to obtain coordinate functions of any point on the cylindrical conductor (1): $x = a_v\cos(\varphi) + x_v$, $y = a_v\sin(\varphi) + y_v$ ($-\pi < \varphi < \pi$); substituting the coordinate functions into the first transformation of the fundamental solution in the step S21 to obtain a second transformation of the fundamental solution: $E_z^{inc}(\vec{\rho}) = \dfrac{k_0\eta}{4} \int_C H_0^{(2)}(k_0|\vec{\rho}-\vec{\rho}'|) \sum_{n=-N_v}^{N_v} X_n^v e^{-jn\varphi'} a_v d\varphi'$; and

S23: integrating the second transformation of the fundamental solution in the step S22 to obtain a third transformation of the fundamental solution: $\int_{-\pi}^{\pi} E_z^{inc}(\vec{\rho}) e^{jn\varphi} a_u d\varphi = \dfrac{k_0\eta}{4} \sum_{v=1}^{J} \sum_{n=-N_v}^{N_v} X_n^v \int_{-\pi}^{\pi} \int_{-\pi}^{\pi} H_0^{(2)}(k_0|\vec{\rho}-\vec{\rho}'|) e^{jn\varphi} e^{-jn\varphi'} a_u d\varphi a_v d\varphi'$,
wherein $a_v$ represents a radius of the $v^{th}$ cylindrical conductor (1) and $a_u$ represents a radius of the $u^{th}$ cylindrical conductor (1).

4. The method of designing the substrate integrated waveguide antenna according to claim 3, **characterized in that**, the step S3 comprises:

S31: turning the third transformation of the fundamental solution in the step S23 into simultaneous linear equations:

$$\begin{bmatrix} A_{11} & A_{12} & \cdots & A_{1N} \\ A_{21} & A_{22} & & A_{2N} \\ \vdots & \vdots & \ddots & \vdots \\ A_{N1} & A_{N2} & \cdots & A_{NN} \end{bmatrix} \begin{bmatrix} X_1 \\ X_2 \\ \vdots \\ X_N \end{bmatrix} = \begin{bmatrix} B_1 \\ B_2 \\ \vdots \\ B_N \end{bmatrix}$$

, wherein A represents inductance of the cylindrical conductor (1), $A_{ii}$ represents self-inductance of the $i^{th}$ cylindrical conductor (1), and $A_{ij}$ represents mutual inductance of the $i^{th}$ cylindrical conductor (1) on the $j^{th}$ cylindrical conductor (1); $X_i$ represents strength of the scattered wave generated by the $i^{th}$ cylindrical conductor (1); and $B_i$ represents current distribution on the $i^{th}$ cylindrical conductor (1); and

S32: symmetrizing a coefficient determinant and obtaining by matrix transformation a formula for the strength of the scattered wave:

$$E_z^S(\vec{\rho}) = -\frac{k_0 \eta}{4} \sum_{v=1}^{N} \sum_{n=-N_v}^{N_v} X_n^v I_n^v$$

, wherein

$$I_n^v = a_v \int_0^{2\pi} H_0^{(2)}\left(k_0 \left|\vec{\rho} - \vec{\rho}'\right|\right) e^{-jn\varphi'} d\varphi' = 2\pi a_v J_n(k_0 a_v) H_n^{(2)}\left(k_0 \left|\vec{\rho} - \vec{\rho}_v\right|\right) e^{-jn\varphi_v},$$

$$H_n^{(2)}\left(k_0 \left|\vec{\rho} - \vec{\rho}_v\right|\right) = \sqrt{\frac{2}{\pi k_0 \left|\vec{\rho} - \vec{\rho}_v\right|}} e^{-j\frac{k_0 \left|\vec{\rho} - \vec{\rho}_v\right| - (2v+1)\pi}{4}}.$$

5. The method of designing the substrate integrated waveguide antenna according to claim 1, **characterized in that**, assuming that a diameter of the cylindrical conductor (1) is D and a center-to-center distance between two adjacent cylindrical conductors (1) in a direction parallel to a waveguide channel (4) is P, D/P=0.5.

6. The method of designing the substrate integrated waveguide antenna according to claim 1, **characterized in that**, the cylindrical conductors (1) are metal tubes.

7. The method of designing the substrate integrated waveguide antenna according to claim 5, **characterized in that**, the coaxial cable (3) is arranged on a center line of the waveguide assembly.

8. The method of designing the substrate integrated waveguide antenna according to claim 5, **characterized in that**, assuming that a wavelength of an incident electromagnetic wave is $\lambda$ and a center-to-center distance between two adjacent cylindrical conductors (1) in a direction perpendicular to the waveguide channel (4) is $D_1$, $D_1$=0.9$\lambda$.

9. The method of designing the substrate integrated waveguide antenna according to claim 5, **characterized in that**, a relationship between a distance $D_2$ from the coaxial cable (3) to a closed end of the dielectric substrate (2) and the wavelength $\lambda$ of the incident electromagnetic wave satisfies $D_2$=0.25$\lambda$.

10. The method of designing the substrate integrated waveguide antenna according to claim 5, **characterized in that**, a relationship between a length $D_3$ of the waveguide channel (4) of the waveguide assembly and the wavelength $\lambda$ of the incident electromagnetic wave satisfies $D_3$=2.4$\lambda$.

FIG. 1

FIG. 2

FIG. 3

**INTERNATIONAL SEARCH REPORT**

| International application No. |
| --- |
| **PCT/CN2022/126192** |

**A.    CLASSIFICATION OF SUBJECT MATTER**

G06F 30/20(2020.01)i;  H01Q 1/36(2006.01)i

According to International Patent Classification (IPC) or to both national classification and IPC

**B.    FIELDS SEARCHED**

Minimum documentation searched (classification system followed by classification symbols)

G06F; H01Q

Documentation searched other than minimum documentation to the extent that such documents are included in the fields searched

Electronic data base consulted during the international search (name of data base and, where practicable, search terms used)

CNTXT, CNABS, VEN, USTXT, CNKI, IEEE: 基板集成波导天线, 导体, 圆柱, 散射波, 边界条件, 柱坐标, SIW, conductor, cylinder, scattered wave, boundary condition, cylindrical coordinate

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 114065559 A (CHANGZHOU XINGYU AUTOMOTIVE LIGHTING SYSTEMS CO., LTD.) 18 February 2022 (2022-02-18)<br>claims 1-10 | 1-10 |
| A | CN 111668589 A (APTIV TECHNOLOGIES LIMITED) 15 September 2020 (2020-09-15)<br>description, paragraphs 0032-0033 | 1-10 |
| A | CN 112688046 A (SOUTH CHINA UNIVERSITY OF TECHNOLOGY) 20 April 2021 (2021-04-20)<br>entire document | 1-10 |
| A | US 2017271761 A1 (DELPHI TECHNOLOGIES, INC.) 21 September 2017 (2017-09-21)<br>entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 December 2022** | **29 December 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
|---|
| **PCT/CN2022/126192** |

| Patent document cited in search report | | | Publication date (day/month/year) | Patent family member(s) | | | Publication date (day/month/year) |
|---|---|---|---|---|---|---|---|
| CN | 114065559 | A | 18 February 2022 | None | | | |
| CN | 111668589 | A | 15 September 2020 | EP | 3706236 | A1 | 09 September 2020 |
| | | | | US | 2020287290 | A1 | 10 September 2020 |
| | | | | CN | 114649668 | A | 21 June 2022 |
| CN | 112688046 | A | 20 April 2021 | None | | | |
| US | 2017271761 | A1 | 21 September 2017 | US | 2020067166 | A1 | 27 February 2020 |
| | | | | CN | 107196038 | A | 22 September 2017 |
| | | | | EP | 3220475 | A1 | 20 September 2017 |
| | | | | CN | 113972469 | A | 25 January 2022 |

Form PCT/ISA/210 (patent family annex) (January 2015)